# FASCICULE DE BREVET EUROPEEN

(11) **EP 1 195 505 B1**
(45) Date de publication et mention de la délivrance du brevet: **14.03.2007**
(21) Numéro de dépôt: 01402569.6
(22) Date de dépôt: 03.10.2001
(51) Int. Cl.: F02D 13/02, F01L 13/00

(54) **Procédé de contrôle d'auto-allumage dans un moteur à quatre temps**
Verfahren zur Steuerung der Selbstzündung in einem Viertaktmotor
Method to control auto-ignition in a four-stroke engine

(30) Priorité: 09.10.2000 FR 0012962
(43) Date de publication de la demande: 10.04.2002
(73) Titulaire: Institut Français du Pétrole, 92852 Rueil-Malmaison Cedex (FR)
(72) Inventeur: Lavy, Jacques, 78280 Guillancourt (FR); Dabadie, Jean-Charles, 92500 Rueil-Malmaison (FR)

(56) Documents cités:
- EP-A- 0 470 869
- WO-A-00/28197
- WO-A-01/46573
- WO-A-99/42718
- DE-A- 10 122 775
- DE-A- 19 808 574
- DE-C- 19 952 093
- FR-A- 2 703 107
- GB-A- 2 328 975
- US-A- 5 682 854
- US-A- 6 082 328

## Description

L'invention concerne un procédé de contrôle d'auto-allumage dans un moteur à combustion interne à quatre temps.

II est déjà connu par le document WO 99/42718 de réaliser un auto-allumage d'un mélange carburé par la commande des soupapes d'échappement pour contrôler la température du mélange air/carburant dans le cylindre. Pour ce faire, on agit sur le taux de gaz d'échappement recirculés (EGR) par la variation du moment d'ouverture et de fermeture des soupapes. Ainsi, il est prévu de fermer précocement la soupape d'échappement afin de conserver dans la chambre de combustion une masse d'EGR.

On a également proposé, dans EP-A-0863301, de commander les soupapes d'échappement et d'admission des cylindres d'un moteur à quatre temps de façon à retenir dans les cylindres une certaine quantité de gaz brûlés avant d'y admettre des gaz frais, en contrôlant la quantité retenue de gaz brûlés et en minimisant leur mélange avec les gaz frais, pour qu'un auto-allumage des gaz frais soit initié dans les chambres de combustion par les gaz brûlés qui sont à température élevée et qui contiennent des espèces actives. On peut pour cela diminuer la durée d'ouverture des soupapes d'échappement des cylindres. En variante, on peut laisser les soupapes d'échappement ouvertes plus longtemps pour réintroduire des gaz brûlés dans les cylindres quand les pistons sont déplacés de leur point mort haut vers leur point mort bas, et retarder de façon correspondante l'ouverture des soupapes d'admission. Ces commandes particulières des soupapes d'échappement et d'admission sont utilisées pendant le fonctionnement à charge partielle du moteur avec auto-allumage contrôlé qui entraîne une réduction très forte de l'émission des oxydes d'azote dans l'atmosphère ainsi que de la consommation, tandis qu'à charge élevée, on revient à une commande traditionnelle des soupapes et à un allumage commandé par étincelle.

La présente invention a pour but d'appliquer ces techniques d'auto-allumage à un moteur à quatre temps du type à plusieurs soupapes d'échappement et plusieurs soupapes d'admission par cylindre, grâce à un procédé de commande des soupapes d'échappement et d'admission qui soit simple, efficace et facile à mettre en oeuvre.

A cet effet, elle propose un procédé de contrôle d'auto-allumage dans un moteur à combustion interne à quatre temps, dans lequel des moyens d'échappement des cylindres sont commandés pour que les cylindres soient remplis partiellement de gaz brûlés et partiellement de gaz frais pour les phases de compression quand le moteur fonctionne à charge partielle, caractérisé en ce que, chaque cylindre étant équipé d'au moins deux moyens d'échappement tels que des soupapes, les deux moyens d'échappement d'un cylindre sont commandés chacun en ouverture et en fermeture et de façon différente pour assurer un échappement des gaz brûlés hors du cylindre pendant la phase d'échappement et une réintroduction de gaz brûlés dans le cylindre durant la phase d'admission quand le piston est déplacé de son point mort haut vers son point mort bas, en ce que la réintroduction de gaz brûlés et l'admission de gaz frais dans le cylindre sont décalées dans le temps l'une par rapport à l'autre et en ce que la réintroduction de gaz brûlés commence avant l'admission de gaz frais et est terminée par fermeture du moyen d'échappement vers la fin de l'admission de gaz frais dans le cylindre.

Le procédé selon l'invention prévoit donc de différencier et de dissocier les fonctions des deux moyens d'échappement de chaque cylindre, pour obtenir une grande quantité de gaz brûlés dans le cylindre, ainsi que le contrôle facilité des cycles d'ouvertures et de fermetures.

Dans une forme de réalisation de l'invention, un premier moyen d'échappement du cylindre est ouvert et l'autre fermé pendant la phase d'échappement quand le piston est déplacé de son point mort bas vers son point mort haut puis le premier moyen d'échappement est fermé et l'autre est ouvert au début de la phase d'admission quand le piston est déplacé de son point mort haut vers son point mort bas.

En variante, on peut prévoir que les deux moyens d'échappement du cylindre sont ouverts pendant la phase d'échappement quand le piston est déplacé de son point mort bas vers son point mort haut, puis qu'un des moyens d'échappement est fermé et l'autre est maintenu ouvert au début de la phase d'admission quand le piston est déplacé de son point mort haut vers son point mort bas.

On réduit ainsi le mélange des gaz brûlés et des gaz frais dans le cylindre, ce qui peut être favorable à l'obtention de l'auto allumage dans certaines conditions de fonctionnement.

Quand le moteur est équipé de plusieurs moyens d'admission par cylindre, les gaz frais peuvent être admis dans le cylindre par un seul moyen d'admission.

De préférence, ce moyen d'admission est situé directement en face de celui des moyens d'échappement du cylindre qui est en position fermée pendant la phase d'admission, dans le cas où les conditions de fonctionnement imposent de limiter le mélange des gaz frais et des gaz brûlés. Au contraire, dans les autres cas, le moyen d'admission est situé directement en face de celui des moyens d'échappement du cylindre qui est en position ouverte pendant la phase d'admission, afin de favoriser les mélanges de gaz.

Dans une autre variante, les deux moyens d'admission sont utilisés, notamment pour favoriser les mélanges de gaz.

De façon générale, le procédé selon l'invention permet de réintroduire dans un cylindre une quantité de gaz brûlés suffisante pour initier l'auto-allumage des gaz frais admis ensuite dans le cylindre. L'échappement des gaz brûlés hors du cylindre pendant la phase d'admission permettent d'éviter la recompression des gaz brûlés dans le cylindre quand le piston est déplacé de son point mort bas vers son point mort haut pendant la phase d'échappement, ce qui serait une source de perte thermique et augmenterait le travail de la boucle basse pression.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un procédé de commande selon l'invention des soupapes d'échappement d'un cylindre d'un moteur à combustion interne à quatre temps ;
- la figure 2 représente schématiquement une variante du procédé selon l'invention ;
- la figure 3 est une vue schématique d'un exemple d'implantation des soupapes d'admission et des soupapes d'échappement sur une culasse.

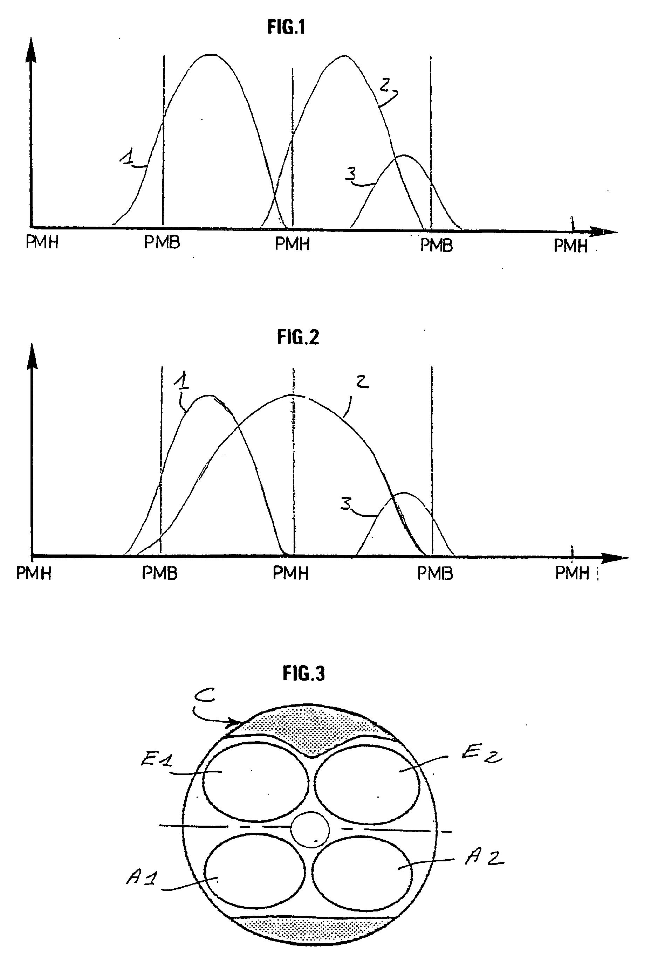

Le fonctionnement d'un premier mode de réalisation de l'invention est illustré schématiquement en figure 1 qui représente les levées des deux soupapes d'échappement et d'une soupape d'admission d'un moteur à combustion interne à quatre temps pendant les différentes phases d'expansion, d'échappement, d'admission et de compression du cycle du moteur.

En figure 1, la courbe 1 représente la levée d'une soupape d'échappement E1 d'une culasse C (figure 3), la courbe 2 représente la levée de la seconde soupape d'échappement E2 de ce cylindre, et la courbe 3 la levée d'une soupape d'admission A1 de ce cylindre.

Selon la figure 3, on peut disposer de plusieurs soupapes d'admission, en particulier deux : A1 et A2.

La soupape d'échappement E1 est commandée de façon traditionnelle et est ouverte pendant la durée de la phase d'échappement, la levée de cette soupape commençant sensiblement vers la fin de la phase d'expansion quand le piston se trouve au voisinage de son point mort bas et se terminant à la fin de la phase d'échappement quand le piston est au voisinage de son point mort haut.

La levée de la soupape d'échappement E2 commence avant la fin de la phase d'échappement et se termine vers la fin de la phase d'admission, quand le piston arrive au voisinage de son point mort bas. La fin de la fermeture permet ainsi de contrôler le taux de gaz résiduels.

La levée de la soupape d'admission A1 commence à peu près au moment de la fermeture de la soupape d'échappement E2 afin de minimiser le mélange gaz frais/gaz brûlés et se termine au début de la phase de compression, quand le piston commence à être déplacé de son point mort bas vers son point mort haut. Le croisement des déplacements de ces soupapes peut aider à contrôler le mélange gaz frais/gaz brûlés.

Pendant la phase d'échappement, les gaz brûlés sont chassés du cylindre par le piston qui est déplacé vers son point mort haut et sortent du cylindre par la soupape d'échappement E1. Pendant la phase suivante d'admission, une partie des gaz brûlés est réintroduite dans le cylindre par la soupape d'échappement E2 qui est ouverte, et remplit une partie du cylindre au fur et à mesure du déplacement du piston vers son point mort bas puis des gaz frais sont admis dans le cylindre par la soupape d'admission A1, sensiblement jusqu'à la fin de la phase d'admission. Les gaz frais ainsi introduits dans la chambre de combustion se mélangent peu avec les gaz brûlés qui ont été précédemment réintroduits dans le cylindre. Pendant la phase de compression, les soupapes d'échappement et d'admission sont fermées de sorte que la combinaison de la pression, de la température élevée des gaz brûlés et de la présence d'espèces réactives dans ces derniers peut provoquer un auto-allumage des gaz frais dans la chambre de combustion du cylindre.

On voit bien en figure 1 que les deux soupapes d'échappement du cylindre sont tour à tour commandées en ouverture et en fermeture et qu'elles ont des fonctions différentes, l'une servant à l'évacuation des gaz brûlés hors du cylindre, l'autre à la réintroduction des gaz brûlés dans le cylindre. On peut passer d'un fonctionnement normal, où les deux soupapes d'échappement sont ouvertes et fermées simultanément, au fonctionnement selon l'invention illustré en figure 1, par un décalage de la commande de la soupape d'échappement E2. De même, il suffit de décaler l'ouverture de la soupape d'admission A1, tout en gardant le même moment de fermeture, pour parvenir au mode de fonctionnement illustré en figure 1.

Dans le mode de fonctionnement décrit ci-dessus, la soupape d'admission A2 reste fermée en permanence.

Ce mode de fonctionnement présente l'avantage supplémentaire qu'aucune des deux soupapes d'échappement n'est complètement levée quand le piston est au point mort haut, ce qui évite tout risque d'interférence de ces soupapes avec la tête du piston.

On notera également que celle des deux soupapes d'admission A1 et A2 qui est utilisée pour l'admission des gaz frais pendant le fonctionnement du moteur à charge partielle et en mode d'auto-allumage est celle qui se trouve directement en face de la soupape d'échappement E1, c'est-à-dire de la soupape d'échappement qui est fermée pendant la phase d'admission.

L'invention s'applique également selon la figure 1, si la fermeture de la soupape E2 a lieu sensiblement en même temps que la fermeture de la soupape d'admission.

Dans une variante de réalisation représentée schématiquement en figure 2, la soupape d'échappement E1 est commandée de la même façon que déjà décrit en référence à la figure 1 mais la levée de la soupape d'échappement E2 commence à peu près en même temps que celle de la soupape d'échappement E1 et est prolongée sensiblement pendant la fin de la phase d'admission. La commande de la soupape d'admission A1 n'est pas modifiée, comme représenté par la courbe 3.

Dans ce mode de réalisation, la durée de la levée de la soupape d'échappement E2 est plus importante et commence plus tôt que dans le mode de réalisation illustré en figure 1, pour se terminer à peu près au même moment, ce qui a pour conséquence que davantage de gaz brûlés seront évacués du cylindre pendant la phase d'échappement.

On peut parvenir au mode de fonctionnement représenté en figure 2, à partir du fonctionnement habituel utilisé quand le moteur est à pleine charge, en ne modifiant pas la commande de la soupape d'échappement E1, en modifiant la commande de la soupape d'échappement E2 pour allonger la durée de sa levée sensiblement jusqu'à la fin de la phase d'admission, en modifiant la levée de la soupape d'admission A1 et en interdisant la levée de la soupape d'admission A2.

Dans une autre variante de réalisation, on peut ne pas modifier la commande de la soupape d'admission A1, de sorte que la réintroduction de gaz brûlés dans le cylindre et l'admission de gaz frais dans ce cylindre auront lieu à peu près simultanément.

Bien entendu, le procédé selon l'invention est applicable au cas où les moyens d'échappement et d'admission comprennent des boisseaux tournants à la place des soupapes à déplacement linéaire alternatif.

## Revendications

1. Procédé de contrôle d'auto-allumage dans un moteur à combustion interne à quatre temps, dans lequel des moyens d'échappement et d'admission des cylindres sont commandés pour que les cylindres soient remplis partiellement de gaz brûlés et partiellement de gaz frais pour les phases de compression quand le moteur fonctionne à charge partielle, **caractérisé en ce que**, chaque cylindre (C) étant équipé d'au moins deux moyens d'échappement tels que des soupapes (E1, E2), les deux moyens d'échappement d'un cylindre sont commandés chacun en ouverture et en fermeture et de façon différente pour assurer un échappement des gaz brûlés hors du cylindre pendant la phase d'échappement et une réintroduction de gaz brûlés dans le cylindre pendant la phase d'admission quand le piston est déplacé de son point mort haut vers son point mort bas, **en ce que** la réintroduction de gaz brûlés et l'admission de gaz frais dans le cylindre sont décalées dans le temps l'une par rapport à l'autre et **en ce que** la réintroduction de gaz brûlés commence avant l'admission de gaz frais et est terminée par fermeture du moyen d'échappement (E2) vers la fin de l'admission de gaz frais dans le cylindre.

2. Procédé selon la revendication 1, **caractérisé en ce qu'**un des moyens d'échappement (E1, E2) est fermé quand l'autre est ouvert pendant la phase d'admission.

3. Procédé selon la revendication 1 ou 2, **caractérisé en ce qu'**un premier moyen d'échappement (E1) du cylindre est ouvert et l'autre (E2) fermé pendant la phase d'échappement quand le piston est déplacé de son point mort bas vers son point mort haut, puis le premier moyen d'échappement (E1) est fermé et l'autre (E2) est ouvert au début de la phase d'admission.

4. Procédé selon la revendication 1 ou 2, **caractérisé en ce que** les deux moyens d'échappement (E1 et E2) du cylindre sont ouverts pendant la phase d'échappement quand le piston est déplacé de son point mort bas vers son point mort haut, puis le premier moyen d'échappement (E1) est fermé et l'autre (E2) est laissé ouvert pendant la phase d'admission.

5. Procédé selon la revendication 1, **caractérisé en ce que** l'admission de gaz frais dans le cylindre commence avant la fin de la réintroduction des gaz brûlés dans le cylindre.

6. Procédé selon l'une des revendications précédentes, **caractérisé en ce que**, le moteur étant équipé de plusieurs moyens d'admission (A1, A2) par cylindre, les gaz frais sont admis dans un cylindre par un seul moyen d'admission quand le moteur fonctionne en charge partielle.

7. Procédé selon la revendication 6, **caractérisé en ce que** ce moyen d'admission est situé directement en face de celui (**E1**) des moyens d'échappement du cylindre qui est en position fermée pendant la phase d'admission dans le cas des conditions de fonctionnement où il faut limiter le mélange des gaz frais et des gaz brûlés.

8. Procédé selon la revendication 6, **caractérisé en ce que** ce moyen d'admission est situé directement en face de celui (**E2**) des moyens d'échappement du cylindre qui est en position ouverte pendant la phase d'admission dans le cas des conditions de fonctionnement où il faut favoriser le mélange des gaz frais et des gaz brûlés.

9. Procédé selon la revendication 8, dans lequel les deux moyens d'admission sont ouverts pendant la phase d'admission.

## Claims

1. A method of controlling the auto-ignition in a four-stroke internal combustion engine, in which outlet and intake means of the cylinders are regulated in order for the cylinders to be partially filled with burned gases and partially filled with fresh gases for the compression phases when the engine is operating at half load, **characterised in that**, due to the fact that each cylinder (C) is equipped with at least two outlet means such as valves (E1, E2), the two outlet means of a cylinder are each regulated with regard to opening and closing and are each regulated in a different manner in order to ensure an outlet of the burned gases out of the cylinder during the outlet phase and a reintroduction of burned gases into the cylinder during the intake phase when the piston is moved from its upper dead centre towards its lower dead centre, **in that** the reintroduction of burned gases and the Intake of fresh gases into the cylinder are offset from one another in time, and **in that** the reintroduction of burned gases begins before the intake of fresh gases and is ended by closing the outlet means (E2) towards the end of the intake of fresh gases into the cylinder.

2. The method according to Claim 1, **characterised in that** one of the outlet means (E1, E2) is closed when the other is open during the intake phase.

3. The method according to Claim 1 or 2, **characterised in that** a first outlet means (E1) of the cylinder is open and the other (E2) is closed during the outlet phase when the piston is moved from its lower dead centre towards its upper dead centre, then the first outlet means (E1) is closed and the other (E2) is open at the beginning of the intake phase.

4. The method according to Claim 1 or 2, **characterised in that** the two outlet means (E1 and E2) of the cylinder are open during the outlet phase when the piston is moved from its lower dead centre towards its upper dead centre, then the first outlet means (E1) is closed and the other (E2) is left open during the intake phase.

5. The method according to Claim 1, **characterised in that** the intake of fresh gases into the cylinder begins before the end of the reintroduction of the burned gases into the cylinder.

6. The method according to one of the preceding claims, **characterised in that**, due to the fact that the engine is equipped with several intake means (A1, A2) per cylinder, fresh gases are admitted into a cylinder by a single intake means when the engine is operating at partial load.

7. The method according to Claim 6, **characterised in that** this intake means is situated directly opposite that (E1) of the outlet means of the cylinder which is in the closed position during the intake phase in the case of the operating conditions where it is necessary to limit the mixing of the fresh gases and the burned gases.

8. The method according to Claim 6, **characterised in that** this intake means is situated directly opposite that (E2) of the outlet means of the cylinder which is in the open position during the intake phase in the case of the operating conditions where it is necessary to encourage the mixing of the fresh gases and the burned gases.

9. The method according to Claim 8, in which the two intake means are open during the intake phase.

## Patentansprüche

1. Verfahren zur Steuerung der Selbstzündung in einem Viertaktmotor, wobei die Auslass- und Einlassmittel der Zylinder gesteuert werden, damit die Zylinder bei den Kompressionsphasen teilweise mit verbrannten Gasen und teilweise mit Frischgasen gefüllt sind, wenn der Motor im Teillastbetrieb ist, **dadurch gekennzeichnet, dass** jeder Zylinder (C) mit mindestens zwei Auslassmitteln wie z.B. Ventilen (E1, E2) versehen ist, wobei die Öffnung und Schließung der zwei Auslassmittel eines Zylinders jeweils auf verschiedene Weise gesteuert werden, um einen Auslass der verbrannten Gase aus dem Zylinder während der Auslassphase und eine Wiedereinleitung von verbrannten Gasen in den Zylinder während der Einlassphase zu gewährleisten, wenn der Kolben sich von seinem oberen Totpunkt zu seinem unteren Totpunkt hin bewegt, dass die Wiedereinleitung von verbrannten Gasen und der Einlass von Frischgasen in den Zylinder relativ zueinander zeitlich versetzt sind, und dass die Wiedereinleitung von verbrannten Gasen vor dem Einlass von Frischgasen beginnt und gegen Ende des Einlasses von Frischgasen in den Zylinder durch Schließung des Auslassmittels (E2) beendet wird.

2. Verfahren nach Anspruch 1, **dadurch gekennzeichnet, dass** während der Einlassphase eines der Auslassmittel (E1, E2) geschlossen ist, wenn das andere geöffnet ist.

3. Verfahren nach Anspruch 1 oder 2, **dadurch gekennzeichnet, dass** während der Auslassphase ein erstes Auslassmittel (E1) des Zylinders geöffnet ist und das andere (E2) geschlossen ist, wenn der Kolben sich von seinem unteren Totpunkt zu seinem oberen Totpunkt hin bewegt, dann das erste Auslassmittel (E1) geschlossen wird und das andere (E2) am Anfang der Einlassphase geöffnet wird.

4. Verfahren nach Anspruch 1 oder 2, **dadurch gekennzeichnet, dass** die zwei Auslassmittel (E1 und E2) des Zylinders während der Auslassphase geöffnet sind, wenn der Kolben sich von seinem unteren Totpunkt zu seinem oberen Totpunkt hin bewegt, dann das erste Auslassmittel (E1) geschlossen wird und das andere (E2) während der Einlassphase offen gelassen wird.

5. Verfahren nach Anspruch 1, **dadurch gekennzeichnet, dass** der Einlass von Frischgasen in den Zylinder vor dem Ende der Wiedereinleitung der verbrannten Gase in den Zylinder beginnt.

6. Verfahren nach einem der vorherigen Ansprüche, **dadurch gekennzeichnet, dass** der Motor mit mehreren Einlassmitteln (A1, A2) pro Zylinder versehen ist, wobei die Frischgase durch ein einziges Einlassmittel in den Zylinder eingelassen werden, wenn der Motor im Teillastbetrieb ist.

7. Verfahren nach Anspruch 6, **dadurch gekennzeichnet, dass** dieses Einlassmittel direkt gegenüber dem (E1) der Auslassmittel des Zylinders angeordnet ist, das im Falle von Betriebsbedingungen, wo die Mischung der Frischgase und der verbrannten Gase begrenzt werden muss, während der Einlassphase in geschlossener Stellung ist.

8. Verfahren nach Anspruch 6, **dadurch gekennzeichnet, dass** dieses Einlassmittel direkt gegenüber dem (E2) der Auslassmittel des Zylinders angeordnet ist, das im Falle von Betriebsbedingungen, wo die Mischung der Frischgase und der verbrannten Gase begünstigt werden muss, während der Einlassphase in geöffneter Stellung ist.

9. Verfahren nach Anspruch 8, wobei die zwei Einlassmittel während der Einlassphase geöffnet sind.
